# EUROPEAN PATENT SPECIFICATION

(11) **EP 4 454 521 B1**
(45) Date of publication and mention of the grant of the patent: **25.02.2026**
(21) Application number: 24166866.4
(22) Date of filing: 27.03.2024
(51) Int. Cl.: A47J 31/46, A47J 31/60

(54) **CLEANING PIPELINE SYSTEM OF BEVERAGE MACHINE, BEVERAGE MACHINE AND CLEANING CONTROL METHOD**
REINIGUNGSROHRLEITUNGSSYSTEM EINER GETRÄNKEMASCHINE, GETRÄNKEMASCHINE UND REINIGUNGSSTEUERUNGSVERFAHREN
SYSTÈME DE CANALISATION DE NETTOYAGE DE MACHINE À BOISSON, MACHINE À BOISSON ET PROCÉDÉ DE COMMANDE DE NETTOYAGE

(30) Priority: 12.04.2023 CN 202310390057
(43) Date of publication of application: 30.10.2024
(73) Proprietor: Kalerm Technology (Suzhou) Co., Ltd, Suzhou Jiangsu 215134 (CN)
(72) Inventor: YU, Ningchao, Suzhou, Jiangsu, 215134 (CN)
(74) Representative: ABG Intellectual Property Law, S.L.

(56) References cited:
- WO-A1-2022/214983
- CN-A- 112 656 229
- US-A1- 2005 172 833
- US-A1- 2011 192 287
- US-A1- 2017 013 996

## Description

### TECHNICAL FIELD

The present invention relates to a field of beverage machines, in particular, to a cleaning pipeline system of a beverage machine, a beverage machine and a cleaning control method.

### BACKGROUND

When a beverage is made by a beverage machine such as a coffee machine, a tea machine or a juice machine, in order to enrich tastes of the beverage, milk or milk froth may be added in the beverage, for which milk needs to be delivered into the beverage machine. For some beverage machines, milk or milk froth is delivered in via an emulsifying device. For example, as a kind of emulsifying device, a Venturi frothing apparatus mixes inhaled milk and steam (and air), so as to obtain hot milk or milk froth.

Taking a fully automatic coffee machine as an example, a frothing apparatus is generally located at a coffee outlet. Each time milk coffee beverage has been made, cleaning needs to be performed, otherwise milk will accumulate and spoil, which affects tastes of the next cup of beverage. In addition, if pipelines for delivering milk do not be cleaned regularly, a great potential safety hazard will appear.

Some fully automatic coffee machines may be used for making milk coffee, and frothing apparatuses of most of them basically need to be manually disassembled and manually cleaned. Due to many parts involved in cleaning, there are certain operation requirements for operators. In addition, the operators may have no time to dry remaining water, so that there may be remaining milk or cleaning water inside the frothing apparatus, thereby affecting tastes and quality of the next cup of beverage. It is a great trouble for users to frequently disassemble and clean the pipelines, it is also time-consuming to do so, and sometimes it is necessary for professionals to operate, thereby increasing a usage cost.

In related art, a coffee machine is usually connected to a milk tank in making beverage, a milk-inhaling tube is placed in the milk tank, and a milk tube connected to the milk tank and the coffee machine is exposed. When a milk beverage is made, there is some remaining milk on an exposed part of the milk tube. In cleaning after the beverage has been made, there is some remaining water on the exposed part of the milk tube, which affects sensory experience of users.

Patent application document US20050172833A discloses a device is provided for producing milk foam, in particular in combination with an automatic coffee machine, which has a mixing chamber to which milk, air, and rinsing medium can be supplied via various supply lines, wherein the supply of the rinsing medium to the mixing chamber takes place at least partially via the milk supply line. Here it is essential that the air supply line, at least with its end segment connected to the mixing chamber, can be selectively connected via a valve to a line having rinsing medium.

### SUMMARY

An objective of the present disclosure is to provide a cleaning pipeline system of beverage machine capable of improving cleanness of automatic cleaning.

Another objective of the present disclosure is to provide a beverage machine capable of improving cleanness of automatic cleaning.

Another objective of the present disclosure is to provide a cleaning control method for a beverage machine capable of improving cleanness of automatic cleaning.

The cleaning pipeline system provided by the present invention comprises the features of claim 1.

Preferably, the liquid supply pipeline is connected to the milk supply joint through the first pump, and the first pump is arranged to selectively introduce liquid from the liquid supply pipeline into the milk supply pipeline.

Preferably, the cleaning pipeline system further includes a delivery pipeline, the emulsifying device includes a first air inlet and a milk inlet, the milk supply pipeline is connected to the milk inlet, and the delivery pipeline is connected between the first air inlet and the liquid supply source.

Preferably, the liquid outlet is configured as a water outlet, the cleaning pipeline system further includes a second pump and a first control valve, the second pump is provided between the liquid supply pipeline and the liquid supply source, the first control valve is provided on the liquid supply pipeline, the second pump is used for pumping liquid from the liquid supply source to the liquid supply pipeline, and the first control valve selectively controls a fluid communication from the liquid supply pipeline to the liquid outlet pipeline.

Preferably, the liquid outlet is configured as a beverage outlet, the cleaning pipeline system further includes a brewing device and a second pump, the brewing device is connected to the beverage outlet, the second pump is provided between the liquid supply pipeline and the liquid supply source, and the second pump selectively pumps liquid from the liquid supply source to the brewing device.

Preferably, the cleaning pipeline system further includes a first heater provided upstream of the liquid supply pipeline, the first heater is used for heating liquid which is from the liquid supply source and delivered to the liquid outlet pipeline or the first pump via the liquid supply pipeline.

Preferably, the delivery pipeline is connected to the liquid supply pipeline, the cleaning pipeline system has a first cleaning mode and a second cleaning mode, wherein in the first cleaning mode, the milk inlet is open, and the first pump delivers liquid from the liquid supply pipeline to the milk inlet via the milk supply pipeline; in the second cleaning mode, the delivery pipeline delivers liquid from liquid supply pipeline to the first air inlet.

Preferably, the cleaning pipeline system further includes a second heater, the delivery pipeline is connected to the second heater via a steam valve; the delivery pipeline is selectively in fluid communication with the liquid supply pipeline or the liquid outlet pipeline via a by-pass valve.

Preferably, the cleaning pipeline system further includes a third pump, the third pump is connected downstream of the liquid supply source, and the third pump selectively delivers liquid to the delivery pipeline or the liquid outlet pipeline.

Preferably, the cleaning pipeline system further includes a second pump provided upstream of the liquid supply pipeline, the emulsifying device includes a second air inlet, the second air inlet is connected to an end of an air valve via a pipeline, and another end of the air valve is connected downstream of the second pump.

Preferably, a check valve is provided in the milk supply joint, and the check valve is used to allow unidirectional fluid communication from the milk supply source to the milk supply pipeline.

The beverage machine provided by the present invention includes the above-mentioned cleaning pipeline system.

The cleaning control method provided by the disclosure is for the above mentioned beverage machine. This cleaning control method includes following steps: receiving a first cleaning indication; opening a first control valve on a liquid supply pipeline, and starting a first pump, wherein after flowing into a milk supply pipeline, through a milk supply joint, into a supply pipeline and an emulsifying device, liquid in the liquid supply pipeline is discharged through an outlet of the emulsifying device; and closing the first control valve, and keeping the first pump on, wherein after passing through the milk supply pipeline and the emulsifying device, air introducing from a liquid outlet into the milk supply joint via the first pump is discharged through the outlet of the emulsifying device.

Preferably, the cleaning control method includes: when the first pump is started, a second pump is turned on to draw liquid from a liquid supply source to be delivered to the liquid supply pipeline, and liquid in the liquid supply pipeline is supplied to the milk supply pipeline via the second pump and the first pump together.

Preferably, the cleaning control method includes: receiving a second cleaning indication; opening the first control valve and a second control valve, and starting a second pump, wherein liquid passing through a first heater flows from a delivery pipeline into a steam inlet of the emulsifying device.

Preferably, the cleaning control method includes: after receiving the first cleaning indication or a second cleaning indication, opening a steam valve and starting a third pump, wherein steam passing through a second heater flows into a steam inlet of the emulsifying device via a delivery pipeline.

Preferably, the cleaning control method includes: opening the milk inlet of the emulsifying device when the first cleaning indication is received.

Preferably, the cleaning control method includes: when the first cleaning indication and the second cleaning indication are received, starting the second pump to supply liquid to the first heater, wherein heated liquid is supplied to the liquid supply pipeline; and when an indication of providing steam is received, starting a third pump to supply liquid to a second heater, wherein the second heater outputs steam to the delivery pipeline.

Preferably, the cleaning control method includes: starting the second pump to pump liquid from the liquid supply source to the brewing device and discharge the liquid from the beverage outlet, and then starting the first pump to introduce air in through the beverage outlet of the beverage machine.

In the embodiments of the present invention, based on whether the liquid outlet pipeline is in fluid communication with the milk supply pipeline or not, air may be drawn from the liquid outlet through the first pump when the liquid outlet pipeline is free, so that the function of the pipelines may be expanded and the whole pipelines are more compact. After the milk supply pipeline is cleaned, air may be introduced from the liquid outlet of the beverage machine through the first pump, and the remaining cleaning liquid in the milk supply pipeline and the emulsifying device is discharged with air, thereby improving the convenience and the cleanness of cleaning greatly. According to this, there will not be any remaining milk or cleaning water in the milk supply pipeline and the emulsifying device, such that tastes and quality of the next cup of beverage are not be affected. In this way, the beverage machine may be cleaned automatically in all respects, so as to improve the convenience greatly.

### BRIEF DESCRIPTION OF THE DRAWINGS

FIG. 1 is a schematic structural diagram of a cleaning pipeline system according to an embodiment of the present disclosure.
FIG. 2 is a schematic structural diagram of a cleaning pipeline system according to another embodiment of the present disclosure.
FIG. 3 is a schematic structural diagram of a cleaning pipeline system according to another embodiment of the present disclosure.
FIG. 4 is a schematic structural diagram of a cleaning pipeline system according to another embodiment of the present disclosure.
FIG. 5 is a schematic structural diagram of a beverage machine and a refrigerating unit according to an embodiment of the present disclosure.
FIG. 6 is a schematic flowchart of a cleaning control method for a beverage machine according to an embodiment the present disclosure.

### DETAILED DESCRIPTION OF THE EMBODIMENTS

The following will provide a detailed description of the present disclosure in conjunction with specific embodiments shown in accompanying drawings. However, these embodiments do not limit the present disclosure.

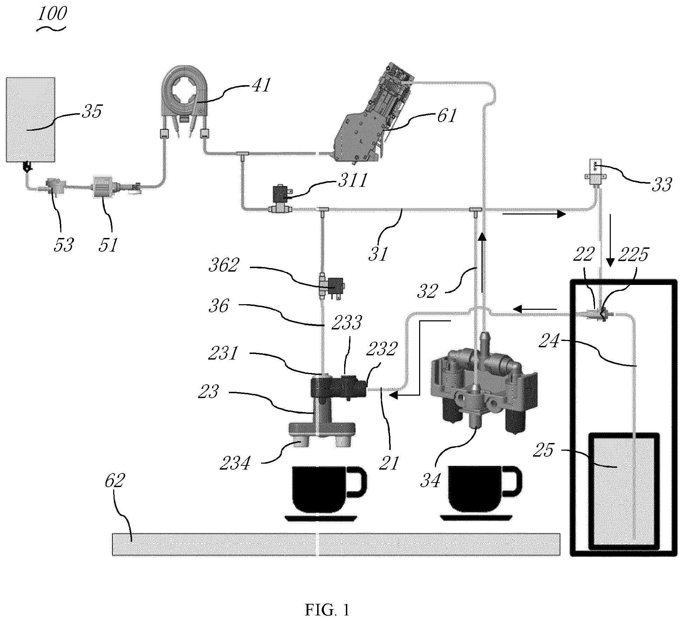

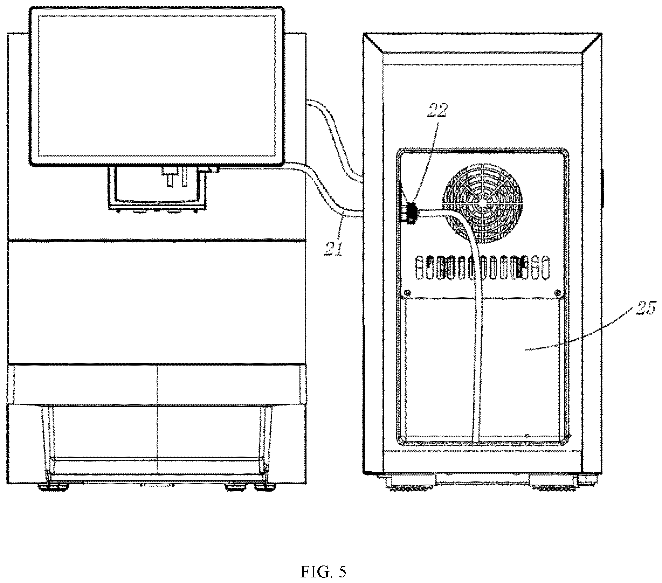

Referring to FIG. 1 to FIG. 5, an embodiment of the present disclosure provides a cleaning pipeline system 100 of a beverage machine. The cleaning pipeline system 100 may include a milk supply pipeline 21 and a liquid supply pipeline 31. The milk supply pipeline 21 is connected between a milk supply joint 22 and an emulsifying device 23 of the beverage machine. A milk supply source 25 is in fluid communication with the milk supply pipeline 21 by the milk supply joint 22. The liquid supply pipeline 31 is connected between a liquid supply source 35 and the milk supply joint 22. The liquid supply pipeline 31 is in fluid communication with the milk supply pipeline 21 by the milk supply joint 22. The milk supply source 25 may be a milk storing container such as a milk tank or a milk case. The milk supply source 25 may be placed in a refrigerating environment, e.g., in a refrigerating apparatus. A milk tube 24 extending into the milk supply source 25 may be connected to the milk supply joint 22, so as to deliver milk to the emulsifying device 23. The liquid supply source 35 may be a water tank in the beverage machine, or may be an external bottled water or an external purified tap water source. In some application scenarios, the liquid supply source 35 may also be a liquid source with a function of cleaning.

The above cleaning pipeline system 100 further includes a liquid outlet pipeline 32 and a first pump 33, the liquid outlet pipeline 32 is connected between the liquid supply pipeline 31 and a liquid outlet 34 of the beverage machine, the first pump 33 is connected between the liquid outlet pipeline 32 and the milk supply joint 22, and the first pump 33 selectively introduces air from the liquid outlet 34 into the milk supply pipeline 21, such that it can be achieved to clean the milk supply pipeline 21 and the emulsifying device 23 with both liquid and air.

With the first pump 33 provided between the liquid outlet pipeline 32 and the milk supply joint 22, air may be introduced from the liquid outlet 34 of the beverage machine after the milk supply pipeline 21 has been cleaned, so that pipeline configuration can be simplified. Remaining liquid in the milk supply pipeline 21 and the main body of the emulsifying device 23 is blown out with air, thereby improving convenience and cleanness of cleaning, by which it can be ensured that there is not any remaining milk or cleaning liquid in the milk supply pipeline 21 and the main body of the emulsifying device 23, so that tastes and quality of the next cup of beverage will not be affected.

In the present embodiment, the liquid supply pipeline 31 is connected to the milk supply joint 22 via the first pump 33, and the first pump 33 selectively introduces liquid from the liquid supply pipeline 31 into the milk supply joint 22. In this way, the first pump 33 not only can draw cleaning liquid from the liquid supply pipeline 31, but also can draw air from the liquid outlet 34, and cleaning liquid or air may be discharged into the milk supply pipeline 21 by the same inlet of the milk supply joint 22. In this way, the cleaning process will be more reliable, and the pipeline connection will be easier and more compact. Of course, in other embodiments, the first pump 33 may only be used for drawing air from the liquid outlet 34, and air may be discharged into the milk supply pipeline 21 by the same inlet of the milk supply joint 22 or different inlets connected to the liquid supply pipeline 31, by which it also can be realized to introduce air and cleaning liquid into the milk supply pipeline 21.

Further, the cleaning pipeline system 100 may further include a delivery pipeline 36, the emulsifying device 23 may include a first air inlet 231, a milk inlet 232, and a second air inlet 233.The milk supply pipeline 21 is connected to the milk inlet 232, and the delivery pipeline 36 is connected between the first air inlet 231 and the liquid supply source 35. The first air inlet 231 may be a steam inlet, the second air inlet 233 may be an air inlet. The delivery pipeline 36 may be connected to the steam inlet, so that not only steam can be delivered when milk froth/hot milk is making, but also hot water can also be delivered to clean the main body of the emulsifying device 23 independently in cleaning the emulsifying device 23, which helps to simplify the pipeline configuration.

In an example, the liquid outlet 34 may be a water outlet of the beverage machine, the cleaning pipeline system 100 may further include a second pump 51, and the second pump 51 is provided between the liquid supply pipeline 31 and the liquid supply source 35. The second pump 51 is used for pumping liquid from the liquid supply source 35 to the liquid supply pipeline 31. Liquid may be introduced from the liquid supply pipeline 31 to the liquid outlet 34 via the liquid outlet pipeline 32. In this way, liquid delivered to the liquid outlet 34 and liquid delivered to the milk supply pipeline 21 can be provided by the same liquid supply source 35. A first control valve 311 is provided on the liquid supply pipeline 31, and it is based on the on-off of the first control valve 311 to select whether liquid is supplied to the liquid outlet pipeline 32 or not. When the first control valve 311 does not supply liquid to the outlet pipeline 32, air can be drawn from the water outlet and delivered into the milk supply pipeline 21 by starting the first pump 33.

The cleaning pipeline system 100 may further include a first heater 41 provided upstream of the liquid supply pipeline 31, the first heater 41 may be a heating device such as an instantaneous electric hot plate or a boiler. The first heater 41 in the present embodiment is an instantaneous electric hot plate. The second pump 51 is provided between the liquid supply source 35 and the first heater 41, the second pump 51 can pumps liquid from the liquid supply source 35 to the first heater 41, and heated water may be delivered to the liquid supply pipeline 31. The liquid supply pipeline 31 can deliver the hot water from the first heater 41 to the water outlet via the liquid outlet pipeline 32. The liquid supply pipeline 31 can also deliver hot water to the emulsifying device 23 through the first pump 33, the milk supply joint 22 and the milk supply pipeline 21. Hot water is supplied by the same heater and the same liquid supply pipeline 31 to the water outlet and the milk supply pipeline 21, such that the pipeline configuration is more compact, the cost is lower, and cleaning effect is better with hot water.

In the embodiment, the first pump 33 may be a diaphragm pump. The diaphragm pump is small in size, it can draw both water and air, and it may prevent backflow, such that milk will not flow into the liquid supply pipeline 31 by the milk supply joint 22. The first pump 33 may be other type pumps, such as a peristaltic pump or a vane pump, both of them can draw air and liquid.

Further, a flowmeter 53 is provided upstream of the second pump 51. The flow of water pumped to the first heater 41 is detected by the flowmeter 53, so that the flow of the hot water output from the water outlet and the flow of the hot water delivered to the cleaning pipeline of the milk supply pipeline 21 via the first pump 33 can be accurately calculated.

Further, a brewing device 61 may be provided between the first heater 41 and a beverage outlet of the beverage machine, and the brewing device 61 may use the hot water passing through the first heater 41 for brewing beverages or cleaning the brewing device 61.

It is only one embodiment to calculate the flow of required water via the flowmeter 53, the flowmeter 53 may not be provided, and the flow of drawn hot water for cleaning may be controlled by controlling the operating time of the second pump 51, so as to further simplify the pipeline configuration. Taking a coffee machine as an example, each time milk coffee/milk froth has been made, if there is a period of time without making the next cup of beverage, the coffee machine may self-start a cleaning program, a part of the milk supply pipeline 21 supplying milk to the emulsifying device 23 from the milk supply source 25 in the refrigerating apparatus is cleaned with hot water, after cleaning, the first control valve 311 is closed; the first pump 33 draws air by a through hole of the liquid outlet 34 at this time, and remaining hot water in the pipelines is discharged via the drawn air flowing into the pipelines; the path for drawing air and discharging remaining hot water is indicated by arrows in the FIG. 1, the end of the path reaches a milk froth outlet 234, such that remaining hot water is discharged to a water storage disk 62 through the milk froth outlet 234; finally, not only the cleaning of the milk supply pipeline 21 is finished, but also it can be ensured that there is not any remaining hot water in the pipelines, which can prevent remaining cleaning hot water from mixing with made milk froth when a milk froth is made next time, thereby avoiding affecting tastes of new milk froth/ milk coffee.

When the emulsifying device 23 needs to be cleaned independently, water in the liquid supply source 35 may be introduced into the emulsifying device 23 via the delivery pipeline 36 and through the first air inlet 231, so that the cleaning of the emulsifying device 23 can be realized. The delivery pipeline 36 may be connected to downstream of the first control valve 311. A second control valve 362 may be provided on the delivery pipeline 36. The on-off of the flow path for discharging to the first air inlet 231 is controlled by the second control valve 362.

In the present embodiment, the delivery pipeline 36 is in fluid communication with the liquid supply pipeline 31. Then automatically cleaning is performing, water is drawn by the second pump 51 to directly clean the main body of the emulsifying device 23 via the delivery pipeline 36. The second pump 51 draws water and the first pump 33 is turned on, the milk supply pipeline 21 is cleaned along a direction indicated by the arrows. Then the second pump 51 stops drawing water and the first pump 33 keeps turning on, and remaining water in the milk supply pipeline 21 will be discharged by drawing air. Based on the above cleaning pipeline system 100, two cleaning modes can be realized in cleaning with liquid. In the first cleaning mode, the first pump 33 delivers liquid from the liquid supply pipeline 31 to the milk inlet 232 via the milk supply pipeline 21. In the second cleaning mode, liquid from the liquid supply pipeline 31 is delivered to the first air inlet 231 via the delivery pipeline 36. Through the liquid supply pipeline 31, hot water can be provided to the liquid outlet 34, and cleaning water can also be provided to the milk supply pipeline 21 and the delivery pipeline 36, so that the pipeline connection is more compact. In the first cleaning mode, the milk inlet 232 is open; in the second cleaning mode, the milk inlet 232 may be closed, so as to prevent water in the emulsifying device 23 from flowing back to the milk supply pipeline 21.

The milk tube 24 connected to the milk supply joint 22 is placed in the milk tank that serves as the milk supply source 25, so that each time it is cleaned, the milk tube 24 needs to be inserted into the water storage disk 62 manually to discharge water, a secondary operation is performed, otherwise wastewater will flow into the milk tank to cause a pollution, and it is not convenient. In an automatic cleaning process, the milk tube 24 also needs to be drawn out of the milk tank and placed in the water storage disk 62, which increases complex operations. In the present embodiment, a check valve 225 is provided in the milk supply joint 22, and unidirectional communication is permitted by the check valve 225 from the milk supply source 25 to the milk supply pipeline 21. In preparing hot milk/milk froth, a negative pressure is generated by the emulsifying device 23 based on the Venturi principle, the diaphragm pump can prevent backflow, and milk can be drawn into the emulsifying device 23 through the check valve 255 to make hot milk/milk froth.

Automatic cleaning for the beverage machine can be realized in all respects with the above cleaning pipeline system 100, which includes an independent cleaning of the main body of the emulsifying device 23, an independent cleaning of the brewing device 61, and a cleaning of the milk supply pipeline 21, so as to ensure cleaning and maintenance of the beverage machine, and also provide users with beverages with better tastes and quality.

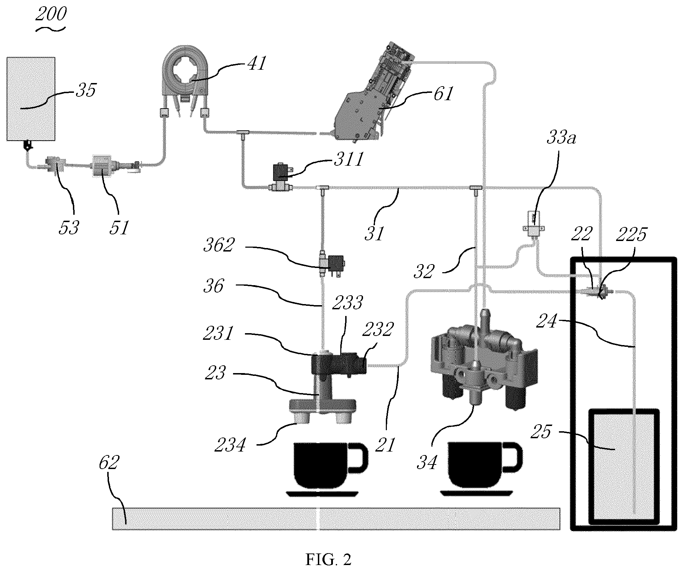

In the above embodiment, the first pump 33 is provided between the liquid supply pipeline 31 and the milk supply joint 22. Referring to FIG. 2, a cleaning pipeline system 200 is different from the above embodiment, the difference is that an end of the first pump 33a is connected to the liquid outlet pipeline 32 or a connection of the liquid supply pipeline 31 and the liquid outlet pipeline 32, and another end of the first pump 33a is connected to an inlet of the milk supply pipeline 22 or the liquid supple pipeline 31. In other words, it may be considered that the first pump 33a is in parallel connection with the liquid supple pipeline 31. According to this, similarly, the first pump 33a not only can introduce liquid from the liquid supply pipeline 31 into the milk supply pipeline 21, but also can introduce air from the liquid outlet 34 into the milk supply pipeline 21, so that pipeline configuration is more flexible.

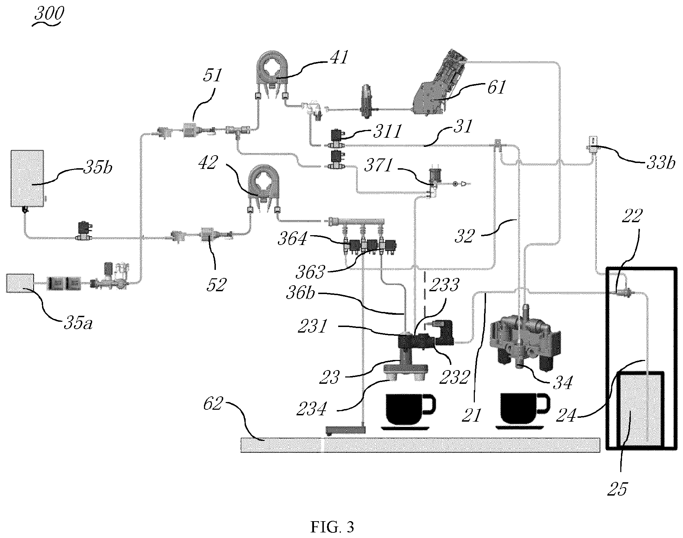

Referring to FIG. 3, in another embodiment, a cleaning pipeline system 300 is different from the above embodiment, the difference is that the cleaning pipeline system 300 further includes a second heater 42. The fist heater 41 is connected to the liquid supply pipeline 31, and the second heater 42 is connected to the delivery pipeline 36b. The liquid supply source 35a supplies liquid to the first heater 41 by the second pump 51, and the liquid supply source 35b supplies liquid to the second heater 42 by a third pump 52. The delivery pipeline 36b is connected to the second heater 42 through a steam valve 363. In this way, steam or hot water can be delivered to the delivery pipeline 36b by the second heater 42, and workload of the first heater 41 is reduced. The liquid supply source 35a and 35b each may be an independent liquid supply source, or may be combined into a liquid supply source.

The delivery pipeline 36b is selectively in fluid communication with the liquid supply pipeline 31 through a by-pass valve 364. In this way, hot water can be provided to the delivery pipeline 36b by the first heater 41, and steam can be provided to the delivery pipeline 36b by the second heater 42. Each heater may maintain a respective temperature separately based on a difference of the supplied liquid, so as to control the heater conveniently. The steam valve 363 and the by-pass valve 364 are equivalent to the second control valve in the above embodiment, and hot water or steam can be selectively supplied to the delivery pipeline 36b by the steam valve 363 and the by-pass valve 364. Of course, similarly, the second heater 42 is connected to the liquid supply pipeline 31 through the by-pass valve 364, such that in a case that workload of the first heater 41 is high, hot water can be switched to be supplied by the second heater 42 to the liquid outlet 34 or the milk supply pipeline 21.

The second air inlet 233 is connected to an end of an air valve 371 via a pipeline, and another end of the air valve 371 is connected to a pipeline between the second pump 51 and the first heater 41. In this way, cleaning of the air inlet can be achieved by opening the air valve 371 and the steam valve 363. In cleaning the air inlet, the air valve 371 may be closed later than the steam valve 363, so as to ensure that steam can be discharged completely.

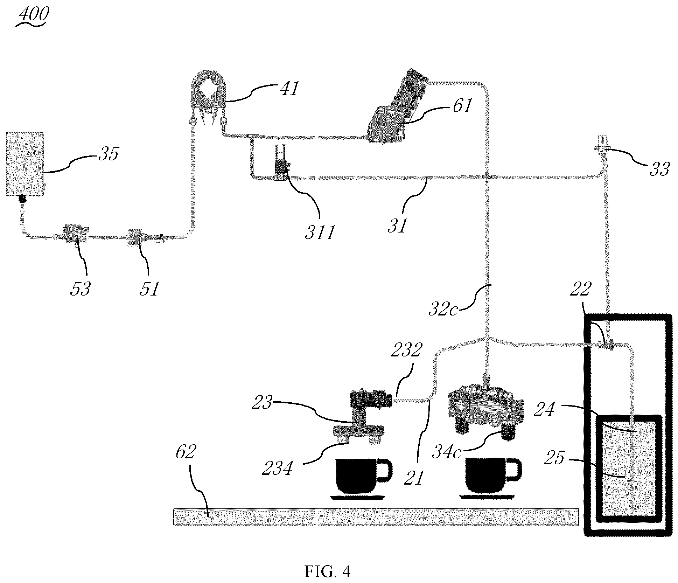

Referring to FIG. 4, a cleaning pipeline system 400 is different from the above embodiment, the difference is that in cleaning pipeline system 400, the liquid outlet 34c is configured as a beverage outlet of the beverage machine. The cleaning pipeline system 400 includes the brewing device 61 connected to the beverage outlet. The second pump 51 is provided between the liquid supply pipeline 31 and the liquid supply source 35. The second pump 51 selectively pumps liquid from the liquid supply source 35 to the brewing device 61. The liquid outlet pipeline 32c is connected between the brewing device 61 and the liquid outlet 34c. Beverages made by the brewing device 61 can be discharged through the beverage outlet. An indication for cleaning pipeline system is issued in response to the beverage machine not making the next cup of beverage within a certain period of time, so that air from the liquid outlet 34c is introduced into the milk supply pipeline 21 by the first pump 33 without affecting, by which the pipeline configuration is more flexible. In order to prevent a blocking problem of the first pump 33 due to remaining beverage drawn to the first pump 33, before air is drawn from the liquid outlet 34c by the first pump 33, water may be pumped to the liquid outlet 34c by using the second pump 51, the remaining beverage is discharged, and then air is drawn to discharge the remaining cleaning water by using the first pump 33.

Referring to FIG. 1 to FIG. 5, a beverage machine is provided. The beverage machine may include the above cleaning pipeline system. Specifically, the pipeline system may include a milk supply pipeline 21, a liquid supply pipeline 31, a liquid outlet pipeline 32 and a first pump 33. The milk supply pipeline 21 is connected between a milk supply joint 22 out of the beverage machine and an emulsifying device 23 of the beverage machine. A milk supply source 25 is in fluid communication with the milk supply pipeline 21 by the milk supple joint 22. The liquid supply pipeline 31 is connected between a liquid supply source 35 and the milk supply joint 22. The liquid supply pipeline 31 is in fluid communication with milk supply pipeline 21 by the milk supply joint 22. The liquid outlet pipeline 32 is connected between the liquid supply pipeline 31 and the liquid outlet 34 of the beverage machine. The first pump 33 is connected between the liquid outlet pipeline 32 and the milk supply joint 22. The beverage machine may have a liquid cleaning mode and an air cleaning mode. In the liquid cleaning mode, liquid from the liquid supply pipeline 31 is delivered to the milk supply pipeline 21 via the milk supply joint 22. In the air cleaning mode, the first pump 33 operably delivers air from the liquid outlet 34 to the milk supply pipeline 21 via the milk supply joint 22. When the beverage machine is being cleaned, the first cleaning mode of the liquid cleaning mode may be performed at first, so as to perform liquid cleaning for milk in the pipelines, and then the air cleaning mode may be performed, so as to discharge off remaining cleaning liquid/water in the pipelines, thereby improving convenience and cleanness of cleaning greatly. In some beverage machines with milk tube exposed, the milk tube may keep a dry state by the dual-cleaning mode, thereby improving the sensory experience of users effectively.

It can be understood that the cleaning pipeline system has been detailed above, and for the sake of simplicity, it will not be repeated here. Likewise, the specific configuration of the milk supply pipeline 21, the liquid supply pipeline 31, the liquid outlet pipeline 32 and the first pump 33 can refer to the above, and details are not described herein again.

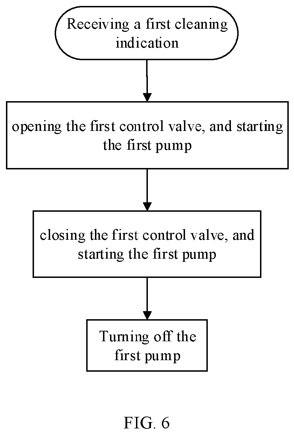

The present disclosure further provides a cleaning control method for a beverage machine, the cleaning control method may be applied to the above-mentioned beverage machine. As shown in FIG. 6, the cleaning control method may include following steps: receiving a first cleaning indication; opening a first control valve 311 on a liquid supply pipeline 31, and starting a first pump 33, 33a, 33b, wherein after flowing into a milk supply pipeline 21 and an emulsifying device 23 by a milk supply joint 22, liquid in the liquid supply pipeline 31 is discharged through an outlet 234 of the emulsifying device 23; closing the first control valve 311, and keeping the first pump 33, 33a, 33b on, wherein after passing through the milk supply pipeline 21 and the emulsifying device 23, air introducing from the liquid outlet 34 of the beverage machine into the milk supply joint 22 by the first pump 33, 33a, 33b is discharged through the outlet of the emulsifying device 23.

The first indication may be a selection input in a operated panel by users, or may be an automatically triggering of a controller based on specific parameters. For example, each time milk coffee/milk froth is made, if the next cup of beverage is not made within a preset time, the beverage machine may start a cleaning program automatically. Alternatively, when the beverage machine is turned on/off, the emulsifying device 23, the brewing device 61 and the milk supply pipeline 21 may be cleaned in all respects.

Air is introduced from the liquid outlet 34 of the beverage machine by controlling the first pump 33, 33a, 33b, no additional air inlet is required, the air blows off remaining water in the milk supply pipeline 21 and in the emulsifying device 23, thereby greatly improving convenience and cleanness of cleaning. There is not any remaining milk or cleaning water in the milk supply pipeline 21 and the emulsifying device 23, tastes and quality of the next cup of beverage will not be affected.

In the above steps, when the first pump 33, 33a, 33b is turned on, the second pump 51 is turned on and delivers liquid from the liquid supply source 35 to the liquid supply pipeline 31, and the second pump 51 and the first pump 33, 33a, 33b together supplies liquid from the liquid supply pipeline 31 to the milk supply pipeline 21. It can also be considered that the first pump 33, 33a, 33b is turned off after a preset delay relative to the first control valve 311 and the second pump 51, and first pump 33, 33a, 33b can assist in supplying liquid in the liquid supply pipeline 31 to the milk supply pipeline 21. The first pump 33, 33a, 33b may be configured to draw both air and water, may also assist in increasing water pressure of cleaning water supplied to the milk supply pipeline 21, so as to improve cleaning effect.

Further, the cleaning control method further includes steps: receiving a second indication; opening the first control valve 311 and a second valve 362, and starting the second pump 51, wherein water passing through the first heater 41 flows from the delivery pipeline 36, 36b into a steam inlet of the emulsifying device 23. When only the emulsifying device 23 needs to be cleaned, it may be selected by operating the panel or may be automatically triggered based on specific parameters, for example, after milk coffee has been made, users may click the cleaning function.

In addition, after receiving the first cleaning indication or the second cleaning indication, the cleaning control method further includes steps: opening a steam valve 363, and starting a second heater 42 and a third pump 52, wherein steam passing through the second heater 42 is delivered to the steam inlet of the emulsifying device 23 via the delivery pipeline 36b. The emulsifying device 23 is cleaned with cleaning water at first, and then the emulsifying device 23 is cleaned with steam, so that the cleaning effect is better.

When the emulsifying device 23 is cleaned independently, i.e., when the second cleaning indication is received, a milk inlet 232 of the emulsifying device 23 may be closed to prevent cleaning water from flowing into the milk supply pipeline 21. When the first cleaning indication is received, the milk inlet 232 of the emulsifying device 23 is open in general, and no additional control is required. The above first cleaning indication and second cleaning indication may be triggered each based on a respective parameter, or may run automatically in order. For example, after the cleaning process of the second cleaning indication is finished, the first cleaning indication is triggered automatically.

In the present embodiment, when the first cleaning indication and the second cleaning indication are received, the second pump 51 is started to supply liquid to the first heater 41, the heated water is supplied to the liquid supply pipeline 31. Based on the different cleaning indications, water passing through the liquid supple pipeline 31 is supplied to the milk supply pipeline 21 via the first pump 33, 33a, 33b, or directly to the emulsifying device 23 via the delivery pipeline 36. After receiving an indication of providing steam, the third pump 52 is started to supply liquid for the second heater 42, and the second heater 42 outputs steam to the delivery pipeline 36. The indication of providing steam may be an indication that milk coffee/milk froth needs to be made, or an indication that pipelines need to be cleaned with steam. Different fluids are provided by the first heater 41 and the second heater 42 respectively, such that respective temperatures can be maintained, and it is more convenient to control the heaters.

In a case that the liquid outlet 34c is configured as a beverage outlet of the beverage machine, the cleaning control method may further include steps: after liquid from the liquid supply pipeline 31 flows into the milk supply pipeline 21 and the emulsifying device 23 via the milk supply joint 22 and then the liquid is discharged through the outlet 234 of the emulsifying device 23, starting the second pump 51 to pump water from the liquid supply source 35 to the brewing device 61 and discharge the liquid from the beverage outlet, and then starting the first pump 33, 33a, 33b to introduce air in through the beverage outlet of the beverage machine.

By means of the above way, a comprehensive automatic cleaning of a milk path is realized more easily, users can choose an independent cleaning of the emulsifying device, an independent cleaning of the milk tube communicated with the emulsifying device, and an independent cleaning of the brewing device. The medium for cleaning may be water, heater water, steam or cleaning water with cleaner which are from a liquid supply source. With automatically cleaning of the milk path, cleanness of using the beverage machine is improved, while there is no need to disassemble pipelines manually or replace pipelines frequently, and it helps to reduce cost and save manpower.

It should be understood that description of the present specification is in terms of the embodiments, but each embodiment does not only include an independent technical solution, this describe way of the specification is only for clarity, a person skilled in the art should consider the specification as a whole, and the technical solutions in the embodiments may also be appropriately combined to form other embodiments that may be understand by a person skilled in the art.

## Claims

1. A cleaning pipeline system of a beverage machine, comprising:
a milk supply pipeline (21), connected between a milk supply joint (22) and an emulsifying device (23), and a milk supply source (25) being in fluid communication with the milk supply pipeline (21) by the milk supply joint (22); and
a liquid supply pipeline (31), connected between a liquid supply source (35, 35a, 35b) and the milk supply joint (22), and the liquid supply pipeline (31) being in fluid communication with the milk supply pipeline (21) via the milk supply joint (22);
**characterized in that** the cleaning pipeline system further comprises a liquid outlet pipeline (32, 32c) and a first pump (33, 33a, 33b), the liquid outlet pipeline (32, 32c) is connected between the liquid supply pipeline (31) and a liquid outlet (34, 34c), the first pump (33, 33a, 33b) is connected between the liquid outlet pipeline (32, 32c) and the milk supply joint (22), and the first pump (33, 33a, 33b) is arranged to selectively introduce air from the liquid outlet (34, 34c) into the milk supply pipeline (21).

2. The cleaning pipeline system according to claim 1, wherein the liquid supply pipeline (31) is connected to the milk supply joint (22) through the first pump (33, 33a, 33b), and the first pump (33, 33a, 33b) is arranged to selectively introduce liquid from the liquid supply pipeline (31) into the milk supply pipeline (21).

3. The cleaning pipeline system according to claim 1, wherein the cleaning pipeline system further comprises a delivery pipeline (36, 36b), the emulsifying device (23) comprises a first air inlet (231) and a milk inlet (232), the milk supply pipeline (21) is connected to the milk inlet (232), and the delivery pipeline (36, 36b) is connected between the first air inlet (231) and the liquid supply source (35, 35a, 35b).

4. The cleaning pipeline system according to claim 1, wherein the liquid outlet (34, 34c) is configured as a water outlet, the cleaning pipeline system further comprises a second pump (51) and a first control valve (311), the second pump (51) is provided between the liquid supply pipeline (31) and the liquid supply source (35, 35a, 35b), the first control valve (311) is provided on the liquid supply pipeline (31), the second pump (51) is used for pumping liquid from the liquid supply source (35, 35a, 35b) to the liquid supply pipeline (31), and the first control valve (311) selectively controls a fluid communication from the liquid supply pipeline (31) to the liquid outlet pipeline (32, 32c).

5. The cleaning pipeline system according to claim 1, wherein the liquid outlet (34, 34c) is configured as a beverage outlet, the cleaning pipeline system further comprises a brewing device (61) and a second pump (51), the brewing device (61) is connected to the beverage outlet, the second pump (51) is provided between the liquid supply pipeline (31) and the liquid supply source (35, 35a, 35b), and the second pump (51) selectively pumps liquid from the liquid supply source (35, 35a, 35b) to the brewing device (61).

6. The cleaning pipeline system according to claim 1, wherein the cleaning pipeline system further comprises a first heater (41) provided upstream of the liquid supply pipeline (31), the first heater (41) is used for heating liquid which is from the liquid supply source (35, 35a, 35b) and delivered to the liquid outlet pipeline (32, 32c) or the first pump (33, 33a, 33b) via the liquid supply pipeline (31).

7. The cleaning pipeline system according to claim 3, wherein the delivery pipeline (36, 36b) is connected to the liquid supply pipeline (31), the cleaning pipeline system has a first cleaning mode and a second cleaning mode, wherein in the first cleaning mode, the milk inlet (232) is open, and the first pump (33, 33a, 33b) delivers liquid from the liquid supply pipeline (31) to the milk inlet (232) via the milk supply pipeline (21); in the second cleaning mode, the delivery pipeline (36, 36b) delivers liquid from the liquid supply pipeline (31) to the first air inlet (231).

8. The cleaning pipeline system according to claim 3, wherein the cleaning pipeline system further comprises a second heater (42), the delivery pipeline (36, 36b) is connected to the second heater (42) via a steam valve (363); the delivery pipeline (36, 36b) is selectively in fluid communication with the liquid supply pipeline (31) or the liquid outlet pipeline (32, 32c) via a by-pass valve (364).

9. The cleaning pipeline system according to claim 3, wherein the cleaning pipeline system further comprises a third pump (52), the third pump (52) is connected downstream of the liquid supply source (35, 35a, 35b), and the third pump (52) selectively delivers liquid to the delivery pipeline (36, 36b) or the liquid outlet pipeline (32, 32c).

10. The cleaning pipeline system according to claim 1, wherein the cleaning pipeline system further comprises a second pump (51) provided upstream of the liquid supply pipeline (31), the emulsifying device (23) comprises a second air inlet (233), the second air inlet t (233) is connected to an end of an air valve (371) via a pipeline, and another end of the air valve (371) is connected downstream of the second pump (51).

11. The cleaning pipeline system according to claim 1, wherein a check valve (225) is provided in the milk supply joint (22), and the check valve (225) is used to allow unidirectional fluid communication from the milk supply source (25) to the milk supply pipeline (21).

12. A beverage machine, **characterized by** comprising the cleaning pipeline system according to any one of claims 1 to 11.

13. A cleaning control method for a beverage machine according to claim 12, comprising following steps:
receiving a first cleaning indication;
opening a first control valve (311) on a liquid supply pipeline (31), and starting a first pump (33, 33a, 33b), wherein after flowing, through a milk supply joint (22), into a milk supply pipeline (21) and an emulsifying device (23), liquid in the liquid supply pipeline (31) is discharged through an outlet of the emulsifying device (23); and
closing the first control valve (311), and keeping the first pump (33, 33a, 33b) on, wherein after passing through the milk supply pipeline (21) and the emulsifying device (23), air introducing from a liquid outlet (34, 34c) into the milk supply joint (22) via the first pump (33, 33a, 33b) is discharged through the outlet of the emulsifying device (23).

14. The cleaning control method according to claim 13, wherein when the first pump (33, 33a, 33b) is started, a second pump (51) is turned on to draw liquid from a liquid supply source (35, 35a, 35b) to be delivered to the liquid supply pipeline (31), and liquid in the liquid supply pipeline (31) is supplied to the milk supply pipeline (21) via the second pump (51) and the first pump (33, 33a, 33b) together; the cleaning control method further comprises after receiving the first cleaning indication or a second cleaning indication, opening a steam valve (363) and starting a third pump (52), wherein steam passing through a second heater (42) flows into a steam inlet of the emulsifying device (23) via a delivery pipeline (36, 36b).

15. The cleaning control method according to claim 13, wherein the cleaning control method further comprises receiving a second cleaning indication; opening the first control valve (311) and a second control valve (362), and starting a second pump (51), wherein liquid passing through a first heater (41) flows from a delivery pipeline (36, 36b) into a steam inlet of the emulsifying device (23);
when the first cleaning indication and the second cleaning indication are received, starting the second pump (51) to supply liquid to the first heater (41), wherein heated liquid is supplied to the liquid supply pipeline (31); and when an indication of providing steam is received, starting a third pump (52) to supply liquid to a second heater (42), wherein the second heater (42) outputs steam to the delivery pipeline (36, 36b).

## Patentansprüche

1. Ein Reinigungsrohrleitungssystem einer Getränkemaschine, das Folgendes umfasst:
eine Milchzufuhrleitung (21), die zwischen einem Milchzufuhranschluss (22) und einer Emulgiervorrichtung (23) angeschlossen ist, und eine Milchzufuhrquelle (25), die durch den Milchzufuhranschluss (22) mit der Milchzufuhrleitung (21) in Fluidverbindung steht; und
eine Flüssigkeitszufuhrleitung (31), die zwischen einer Flüssigkeitszufuhrquelle (35, 35a, 35b) und dem Milchzufuhranschluss (22) angeschlossen ist, und wobei die Flüssigkeitszufuhrleitung über den Milchzufuhranschluss (22) mit der Milchzufuhrleitung (21) in Fluidverbindung steht;
**dadurch gekennzeichnet, dass** das Reinigungsrohrleitungssystem ferner eine Flüssigkeitsauslassleitung (32, 32c) und eine erste Pumpe (33, 33a, 33b) umfasst, die Flüssigkeitsauslassleitung (32, 32c) zwischen der Flüssigkeitszufuhrleitung (31) und einem Flüssigkeitsauslass (34, 34c) angeschlossen ist, die erste Pumpe (33, 33a, 33b) zwischen der Flüssigkeitsauslassleitung (32, 32c) und dem Milchzufuhranschluss (22) angeschlossen ist, und die erste Pumpe (33, 33a, 33b) dazu ausgelegt ist, gezielt Luft von dem Flüssigkeitsauslass (34, 34c) in die Milchzufuhrleitung (21) einzuleiten.

2. Das Reinigungsrohrleitungssystem nach Anspruch 1, wobei die Flüssigkeitszufuhrleitung (31) mit dem Milchzufuhranschluss (22) über die erste Pumpe (33, 33a, 33b) verbunden ist, und die erste Pumpe (33, 33a, 33b) dazu ausgelegt ist, gezielt Flüssigkeit von der Flüssigkeitszufuhrleitung (31) in die Milchzufuhrleitung (21) einzuleiten.

3. Das Reinigungsrohrleitungssystem nach Anspruch 1, wobei das Reinigungsrohrleitungssystem ferner eine Förderleitung (36, 36b) umfasst, die Emulgiervorrichtung (23) einen ersten Lufteinlass (231) und einen Milcheinlass (232) umfasst, die Milchzufuhrleitung (21) mit dem Milcheinlass (232) verbunden ist, und die Förderleitung (36, 36b) zwischen dem ersten Lufteinlass (231) und der Flüssigkeitszufuhrquelle (35, 35a, 35b) angeschlossen ist.

4. Das Reinigungsrohrleitungssystem nach Anspruch 1, wobei der Flüssigkeitsauslass (34, 34c) als Wasserauslass ausgebildet ist, das Reinigungsrohrleitungssystem ferner eine zweite Pumpe (51) und ein erstes Regelventil (311) umfasst, die zweite Pumpe (51) zwischen der Flüssigkeitszufuhrleitung (31) und der Flüssigkeitszufuhrquelle (35, 35a, 35b) vorgesehen ist, das erste Regelventil (311) an der Flüssigkeitszufuhrleitung (31) vorgesehen ist, die zweite Pumpe (51) zum Pumpen von Flüssigkeit von der Flüssigkeitszufuhrquelle (35, 35a, 35b) zu der Flüssigkeitszufuhrleitung (31) verwendet wird, und das erste Regelventil (311) gezielt eine Fluidverbindung von der Flüssigkeitszufuhrleitung (31) zu der Flüssigkeitsauslassleitung (32, 32c) steuert.

5. Das Reinigungsrohrleitungssystem nach Anspruch 1, wobei der Flüssigkeitsauslass (34, 34c) als Getränkeauslass ausgebildet ist, das Reinigungsrohrleitungssystem ferner eine Brühvorrichtung (61) und eine zweite Pumpe (51) umfasst, die Brühvorrichtung (61) mit dem Getränkeauslass verbunden ist, die zweite Pumpe (51) zwischen der Flüssigkeitszufuhrleitung (31) und der Flüssigkeitszufuhrquelle (35, 35a, 35b) vorgesehen ist, und die zweite Pumpe (51) gezielt Flüssigkeit von der Flüssigkeitszufuhrquelle (35, 35a, 35b) zu der Brühvorrichtung (61) pumpt.

6. Das Reinigungsrohrleitungssystem nach Anspruch 1, wobei das Reinigungsrohrleitungssystem ferner eine erste Heizvorrichtung (41) umfasst, die stromaufwärts der Flüssigkeitszufuhrleitung (31) vorgesehen ist, die erste Heizvorrichtung (41) zum Erhitzen von Flüssigkeit verwendet wird, die aus der Flüssigkeitszufuhrquelle (35, 35a, 35b) stammt und über die Flüssigkeitszufuhrleitung (31) zu der Flüssigkeitsauslassleitung (32, 32c) oder zu der ersten Pumpe (33, 33a, 33b) befördert wird.

7. Das Reinigungsrohrleitungssystem nach Anspruch 3, wobei die Förderleitung (36, 36b) mit der Flüssigkeitszufuhrleitung (31) verbunden ist, das Reinigungsrohrleitungssystem einen ersten Reinigungsmodus und einen zweiten Reinigungsmodus besitzt, wobei in dem ersten Reinigungsmodus der Milcheinlass (232) geöffnet ist und die erste Pumpe (33, 33a, 33b) Flüssigkeit von der Flüssigkeitszufuhrleitung (31) über die Milchzufuhrleitung (21) zu dem Milcheinlass (232) befördert; wobei in dem zweiten Reinigungsmodus die Förderleitung (36, 36b) Flüssigkeit von der Flüssigkeitszufuhrleitung (31) zu dem ersten Lufteinlass (231) befördert.

8. Das Reinigungsrohrleitungssystem nach Anspruch 3, wobei das Reinigungsrohrleitungssystem ferner eine zweite Heizvorrichtung (42) umfasst, die Förderleitung (36, 36b) mit der zweiten Heizvorrichtung (42) über ein Dampfventil (363) verbunden ist; die Förderleitung (36, 36b) über ein Bypass-Ventil (364) gezielt mit der Flüssigkeitszufuhrleitung (31) oder der Flüssigkeitsauslassleitung (32, 32c) in Fluidverbindung steht.

9. Das Reinigungsrohrleitungssystem nach Anspruch 3, wobei das Reinigungsrohrleitungssystem ferner eine dritte Pumpe (52) umfasst, die dritte Pumpe (52) stromabwärts der Flüssigkeitszufuhrquelle (35, 35a, 35b) angeschlossen ist, und die dritte Pumpe (52) Flüssigkeit gezielt zu der Förderleitung (36, 36b) oder der Flüssigkeitsauslassleitung (32, 32c) befördert.

10. Das Reinigungsrohrleitungssystem nach Anspruch 1, wobei das Reinigungsrohrleitungssystem ferner eine zweite Pumpe (51) umfasst, die stromaufwärts der Flüssigkeitszufuhrleitung (31) vorgesehen ist, die Emulgiervorrichtung (23) einen zweiten Lufteinlass (233) umfasst, der zweite Lufteinlass (233) über eine Rohrleitung mit einem Ende eines Luftventils (371) verbunden ist und ein anderes Ende des Luftventils (371) stromabwärts der zweiten Pumpe (51) angeschlossen ist.

11. Das Reinigungsrohrleitungssystem nach Anspruch 1, wobei ein Rückschlagventil (225) in dem Milchzufuhranschluss (22) vorgesehen ist und das Rückschlagventil (225) dazu verwendet wird, eine undirektionale Fluidverbindung von der Milchzufuhrquelle (25) zu der Milchzufuhrleitung (21) zu erlauben.

12. Eine Getränkemaschine, **dadurch gekennzeichnet, dass** sie das Reinigungsrohrleitungssystem nach einem der Ansprüche 1 bis 11 umfasst.

13. Ein Reinigungssteuerungsverfahren für eine Getränkemaschine nach Anspruch 12, mit den folgenden Schritten:
Empfangen einer ersten Reinigungsanzeige;
Öffnen eines ersten Regelventils (311) an einer Flüssigkeitszufuhrleitung (31) und Starten einer ersten Pumpe (33, 33a, 33b), wobei Flüssigkeit in der Flüssigkeitszufuhrleitung (31), nachdem sie durch einen Milchzufuhranschluss (22) in eine Milchzufuhrleitung (21) und eine Emulgiervorrichtung (23) geflossen ist, durch einen Auslass der Emulgiervorrichtung (23) ausgeleitet wird; und
Schließen des ersten Regelventils (311) und die erste Pumpe (33, 33a, 33b) eingeschaltet lassen, wobei nach dem Durchgang durch die Milchzufuhrleitung (21) und die Emulgiervorrichtung (23) Luft, die über die erste Pumpe (33, 33a, 33b) von einem Flüssigkeitsauslass (34, 34c) in den Milchzufuhranschluss (22) eingeleitet wird, durch den Auslass der Emulgiervorrichtung (23) ausgeleitet wird.

14. Das Reinigungssteuerungsverfahren nach Anspruch 13, wobei dann, wenn die erste Pumpe (33, 33a, 33b) gestartet wird, eine zweite Pumpe (51) eingeschaltet wird, um Flüssigkeit von einer Flüssigkeitszufuhrquelle (35, 35a, 35b) anzusaugen, damit sie zu der Flüssigkeitszufuhrleitung (31) befördert wird, und wobei Flüssigkeit in der Flüssigkeitszufuhrleitung (31) über die zweite Pumpe (51) und die erste Pumpe (33, 33a, 33b) zusammen der Milchzufuhrleitung (21) zugeführt wird; wobei das Reinigungssteuerungsverfahren ferner nach dem Empfang der ersten Reinigungsanzeige oder einer zweiten Reinigungsanzeige das Öffnen eines Dampfventils (363) und das Starten einer dritten Pumpe (52) umfasst, wobei durch eine zweite Heizvorrichtung (42) strömender Dampf über eine Förderleitung (36, 36b) in einen Dampfeinlass der Emulgiervorrichtung (23) strömt.

15. Das Reinigungssteuerungsverfahren nach Anspruch 13, wobei das Reinigungssteuerungsverfahren ferner den Empfang einer zweiten Reinigungsanzeige umfasst; das Öffnen des ersten Regelventils (311) und eines zweiten Regelventils (362), und das Starten einer zweiten Pumpe (51), wobei Flüssigkeit, die durch eine erste Heizvorrichtung (41) strömt, von einer Förderleitung (36, 36b) in einen Dampfeinlass der Emulgiervorrichtung (23) strömt;
wenn die erste Reinigungsanzeige und die zweite Reinigungsanzeige empfangen werden, Starten der zweiten Pumpe (51), um der ersten Heizvorrichtung (41) Flüssigkeit zuzuführen, wobei die erhitzte Flüssigkeit der Flüssigkeitszufuhrleitung (31) zugeführt wird; und wenn eine Anzeige der Bereitstellung von Dampf empfangen wird, Starten einer dritten Pumpe (52), um einer zweiten Heizvorrichtung (42) Flüssigkeit zuzuführen, wobei die zweite Heizvorrichtung (42) Dampf an die Förderleitung (36, 36b) abgibt.

## Revendications

1. Système de conduites de nettoyage d'une machine à boisson, comprenant :
une conduite d'alimentation en lait (21), raccordée entre un raccord d'alimentation en lait (22) et un dispositif émulsionnant (23), et une source d'alimentation en lait (25) étant en communication fluidique avec la conduite d'alimentation en lait (21) par le raccord d'alimentation en lait (22), et
une conduite d'alimentation en liquide (31), raccordée entre une source d'alimentation en liquide (35, 35a, 35b) et le raccord d'alimentation en lait (22), et la conduite d'alimentation en liquide (31) étant en communication fluidique avec la conduite d'alimentation en lait (21) via le raccord d'alimentation en lait (22),
**caractérisé en ce que**
le système de conduites de nettoyage comprend en outre une conduite de sortie de liquide (32, 32c) et une première pompe (33, 33a, 33b), la conduite de sortie de liquide (32, 32c) est raccordée entre la conduite d'alimentation en liquide (31) et une sortie de liquide (34, 34c), la première pompe (33, 33a, 33b) est raccordée entre la conduite de sortie de liquide (32, 32c) et le raccord d'alimentation en lait (22), et la première pompe (33, 33a, 33b) est agencée de manière à introduire sélectivement de l'air à partir de la sortie de liquide (34, 34c) dans la conduite d'alimentation en lait (21).

2. Système de conduites de nettoyage selon la revendication 1, dans lequel la conduite d'alimentation en liquide (31) est raccordée au raccord d'alimentation en lait (22) par l'intermédiaire de la première pompe (33, 33a, 33b), et la première pompe (33, 33a, 33b) est agencée de manière à introduire sélectivement du liquide provenant de la conduite d'alimentation en liquide (31) dans la conduite d'alimentation en lait (21).

3. Système de conduites de nettoyage selon la revendication 1, dans lequel le système de conduites de nettoyage comprend en outre une conduite de distribution (36, 36b), le dispositif émulsionnant (23) comprend une première entrée d'air (231) et une entrée de lait (232), la conduite d'alimentation en lait (21) est raccordée à l'entrée de lait (232), et la conduite de distribution (36, 36b) est raccordée entre la première entrée d'air (231) et la source d'alimentation en liquide (35, 35a, 35b).

4. Système de conduites de nettoyage selon la revendication 1, dans lequel la sortie de liquide (34, 34c) est configurée comme une sortie d'eau, le système de conduites de nettoyage comprend en outre une deuxième pompe (51) et une première soupape de commande (311), la deuxième pompe (51) est disposée entre la conduite d'alimentation en liquide (31) et la source d'alimentation en liquide (35, 35a, 35b), la première soupape de commande (311) est disposée sur la conduite d'alimentation en liquide (31), la deuxième pompe (51) est utilisée pour pomper du liquide de la source d'alimentation en liquide (35, 35a, 35b) à la conduite d'alimentation en liquide (31), et la première soupape de commande (311) commande sélectivement une communication fluidique de la conduite d'alimentation en liquide (31) à la conduite de sortie de liquide (32, 32c).

5. Système de conduites de nettoyage selon la revendication 1, dans lequel la sortie de liquide (34, 34c) est configurée comme une sortie de boisson, le système de conduites de nettoyage comprend en outre un dispositif de préparation (61) et une deuxième pompe (51), le dispositif de préparation (61) est raccordé à la sortie de boisson, la deuxième pompe (51) est disposée entre la conduite d'alimentation en liquide (31) et la source d'alimentation en liquide (35, 35a, 35b), et la deuxième pompe (51) pompe sélectivement du liquide de la source d'alimentation en liquide (35, 35a, 35b) au dispositif de préparation (61).

6. Système de conduites de nettoyage selon la revendication 1, dans lequel le système de conduites de nettoyage comprend en outre un premier élément chauffant (41) disposé en amont de la conduite d'alimentation en liquide (31), le premier élément chauffant (41) est utilisé pour chauffer du liquide qui provient de la source d'alimentation en liquide (35, 35a, 35b) et distribué à la conduite de sortie de liquide (32, 32c) ou à la première pompe (33, 33a, 33b) via la conduite d'alimentation en liquide (31).

7. Système de conduites de nettoyage selon la revendication 3, dans lequel la conduite de distribution (36, 36b) est raccordée à la conduite d'alimentation en liquide (31), le système de conduites de nettoyage a un premier mode de nettoyage et un second mode de nettoyage, dans lequel, dans le premier mode de nettoyage, l'entrée de lait (232) est ouverte, et la première pompe (33, 33a, 33b) distribue du liquide de la conduite d'alimentation en liquide (31) à l'entrée de lait (232) via la conduite d'alimentation en lait (21), dans le second mode de nettoyage, la conduite de distribution (36, 36b) distribue du liquide de la conduite d'alimentation en liquide (31) à la première entrée d'air (231).

8. Système de conduites de nettoyage selon la revendication 3, dans lequel le système de conduites de nettoyage comprend en outre un second élément chauffant (42), la conduite de distribution (36, 36b) est raccordée au second élément chauffant (42) via une soupape de vapeur (363), la conduite de distribution (36, 36b) est sélectivement en communication fluidique avec la conduite d'alimentation en liquide (31) ou la conduite de sortie de liquide (32, 32c) via une soupape de dérivation (364).

9. Système de conduites de nettoyage selon la revendication 3, dans lequel le système de conduites de nettoyage comprend en outre une troisième pompe (52), la troisième pompe (52) est raccordée en aval de la source d'alimentation en liquide (35, 35a, 35b), et la troisième pompe (52) distribue sélectivement du liquide à la conduite de distribution (36, 36b) ou à la conduite de sortie de liquide (32, 32c).

10. Système de conduites de nettoyage selon la revendication 1, dans lequel le système de conduites de nettoyage comprend en outre une deuxième pompe (51) disposée en amont de la conduite d'alimentation en liquide (31), le dispositif émulsionnant (23) comprend une seconde entrée d'air (233), la seconde entrée d'air (233) est raccordée à une extrémité d'une soupape d'air (371) via une conduite, et une autre extrémité de la soupape d'air (371) est raccordée en aval de la deuxième pompe (51).

11. Système de conduites de nettoyage selon la revendication 1, dans lequel un clapet antiretour (225) est disposé dans le raccord d'alimentation en lait (22), et le clapet antiretour (225) est utilisé pour permettre une communication fluidique unidirectionnelle de la source d'alimentation en lait (25) à la conduite d'alimentation en lait (21).

12. Machine à boisson, **caractérisée en ce qu'**elle comprend le système de conduites de nettoyage selon l'une quelconque des revendications 1 à 11.

13. Procédé de commande de nettoyage pour une machine à boisson selon la revendication 12, comprend les étapes suivantes :
recevoir une première indication de nettoyage,
ouvrir une première soupape de commande (311) sur une conduite d'alimentation en liquide (31) et démarrer une première pompe (33, 33a, 33b), dans lequel, après écoulement, à travers un raccord d'alimentation en lait (22), dans une conduite d'alimentation en lait (21) et un dispositif émulsionnant (23), du liquide dans la conduite d'alimentation en liquide (31) est évacué par une sortie du dispositif émulsionnant (23), et
fermer la première soupape de commande (311) et maintenir la première pompe (33, 33a, 33b) en marche, dans lequel, après un passage à travers la conduite d'alimentation en lait (21) et le dispositif émulsionnant (23), de l'air introduit par une sortie de liquide (34, 34c) dans le raccord d'alimentation en lait (22) via la première pompe (33, 33a, 33b) est évacué par la sortie du dispositif émulsionnant (23).

14. Procédé de commande de nettoyage selon la revendication 13, dans lequel lorsque la première pompe (33, 33a, 33b) est démarrée, une deuxième pompe (51) est mise en marche pour aspirer du liquide à partir d'une source d'alimentation en liquide (35, 35a, 35b) pour être délivré à la conduite d'alimentation en liquide (31), et du liquide dans la conduite d'alimentation en liquide (31) est conjointement fourni à la conduite d'alimentation en lait (21) via la deuxième pompe (51) et la première pompe (33, 33a, 33b), le procédé de commande de nettoyage comprend en outre, après réception de la première indication de nettoyage ou d'une seconde indication de nettoyage, d'ouvrir une soupape de vapeur (363) et de démarrer une troisième pompe (52), dans lequel de la vapeur passant à travers un second élément chauffant (42) s'écoule dans une entrée de vapeur du dispositif émulsionnant (23) via une conduite d'alimentation (36, 36b).

15. Procédé de commande de nettoyage selon la revendication 13, dans lequel le procédé de commande de nettoyage comprend en outre de recevoir une seconde indication de nettoyage, d'ouvrir la première soupape de commande (311) et une seconde soupape de commande (362), et de démarrer une deuxième pompe (51), dans lequel le liquide passant à travers un premier élément chauffant (41) s'écoule à partir d'une conduite de distribution (36, 36b) dans une entrée de vapeur du dispositif émulsionnant (23),
lorsque la première indication de nettoyage et la seconde indication de nettoyage sont reçues, démarrer la deuxième pompe (51) pour fournir le liquide au premier élément chauffant (41), dans lequel le liquide chauffé est fourni à la conduite d'alimentation en liquide (31), et lorsqu'une indication de fourniture de vapeur est reçue, démarrer une troisième pompe (52) pour fournir du liquide à un second élément chauffant (42), dans lequel le second élément chauffant (42) produit de la vapeur dans la conduite d'alimentation (36, 36b).
